# EUROPEAN PATENT APPLICATION

(11) **EP 3 739 471 A1**
(43) Date of publication of application: **18.11.2020**
(21) Application number: 20173459.7
(22) Date of filing: 07.05.2020
(51) Int. Cl.: G06F 16/90

(54) **DEVICE AND METHOD FOR MANAGING LEDGER DATA ON BLOCKCHAIN**

(30) Priority: 16.05.2019 CN 201910410016
(71) Applicant: FUJITSU LIMITED, Kanagawa 211-8588 (JP)
(72) Inventor: Zhou, Ence, Beijing, 100027 (CN); Pi, Bingfeng, Beijing, 100027 (CN); Sun, Jun, Beijing, 100027 (CN)
(74) Representative: Hoffmann Eitle

(57) **Abstract**

A device and a method for managing ledger data on a blockchain are provided. The device includes a traversing unit, a classifying unit and a suggesting unit. The traversing unit is configured to traverse a block where each invalid conflict transaction on the blockchain occurs and one or more previous transactions in a neighboring block thereof, until a previous transaction which causes the invalid conflict transaction is determined. The classifying unit is configured to classify conflict pairs each composed of the invalid conflict transaction and the previous transaction which causes the invalid conflict transaction into different conflict patterns. The suggesting unit is configured to provide, for each of the conflict patterns, a corresponding suggestion of improving a chaincode, to avoid occurrence of the invalid conflict transaction.

## Description

### FIELD

The present disclosure relates to the technical field of blockchains, in particular, to a device and a method for managing ledger data on a blockchain.

### BACKGROUND

The background part provides background information related to the present disclosure, which is not necessarily the conventional technology.

At present, the super ledger Fabric is the most popular alliance blockchain, which supports an intelligent contract called a chaincode. Although the chaincode provides some simple Application Program Interfaces (APIs) to query data, the APIs are only used for building applications on the super ledger Fabric. If a user intends to analyze ledger data off-line or query advanced data, there is no effective methods or tools in the conventional technology. In addition, in order to maintain consistency of the ledger data, the Fabric should verify state edition of each transaction, and once the edition verification fails, an invalid transaction will be caused. However, valid transactions and invalid transactions are both stored on the blockchain, and it is required a technical solution for analyzing the reason why an invalid conflict transaction occurs.

### SUMMARY

This summary part provides a general summary of the present disclosure, rather than discloses a full scope or all features thereof.

In order to understand occurrence of the invalid conflict transaction clearly, a technical solution for analyzing the reason why the invalid conflict transaction occurs is provided according to the present disclosure, and a corresponding optimization suggestion is further provided to avoid occurrence of the invalid conflict transaction. In addition, the technical solution according to the present disclosure may be used to perform data analysis for application programs of the blockchain. With the technical solution according to the present disclosure, a convenient way to query data on the blockchain as needed is provided, and a complete history record of changed data can be tracked.

According to an aspect of the present disclosure, a device for managing ledger data on a blockchain is provided, which includes a traversing unit, classifying unit and a suggesting unit. The traversing unit is configured to traverse a block where each invalid conflict transaction on the blockchain occurs and one or more previous transactions in a neighboring block thereof, until a previous transaction which causes the invalid conflict transaction is determined. The classifying unit is configured to classify conflict pairs each composed of the invalid conflict transaction and the previous transaction which causes the invalid conflict transaction into different conflict patterns. The suggesting unit is configured to provide, for each of the conflict patterns, a corresponding suggestion of improving a chaincode, to avoid occurrence of the invalid conflict transaction.

According to another aspect of the present disclosure, a method for managing ledger data on a blockchain is provided, which includes: traversing a block where each invalid conflict transaction on the blockchain occurs and one or more previous transactions in a neighboring block thereof, until a previous transaction which causes the invalid conflict transaction is determined; classifying conflict pairs each composed of the invalid conflict transaction and the previous transaction which causes the invalid conflict transaction into different conflict patterns; and providing, for the conflict patterns, a corresponding suggestion of improving a chaincode, to avoid occurrence of the invalid conflict transaction.

According to another aspect of the present disclosure, a device for managing ledger data on a blockchain is provided, which includes a traversing unit and an organizing unit. The traversing unit is configured to traverse all blocks on the blockchain, to extract document structures of each of the transactions. The organizing unit is configured to re-organize the ledger data using the document structures, to provide a ledger data query.

According to another aspect of the present disclosure, a method for managing ledger data on a blockchain is provided, which includes: traversing all blocks on the blockchain, to extract document structures of all transactions; and re-organizing the ledger data using the document structures, to provide a ledger data query.

According to a further aspect of the present disclosure, a device for managing ledger data on a blockchain is provided, which includes a traversing unit, an organizing unit and an indexing unit. The traversing unit is configured to traverse all transactions stored in the ledger data on the blockchain. The organizing unit is configured to re-organize the ledger data based on identifiers of the ledger data. The indexing unit is configured to establish indices for the ledger data based on the identifiers.

According to another aspect of the present disclosure, a method for managing ledger data on a blockchain is provided, which included: traversing all transactions stored in the ledger data on the blockchain; re-organizing the ledger data based on identifiers of the ledger data; and establishing indices for the ledger data based on the identifiers.

According to another aspect of the present disclosure, a program product is provided. The program product includes machine readable instruction codes stored therein. The machine readable instruction codes, when being read and executed by a computer, cause the computer to perform the method for managing ledger data on a blockchain according to the present disclosure.

According to another aspect of the present disclosure, a machine readable storage medium is further provided, which carries the program product according to the present disclosure thereon.

With the technical solution according to the present disclosure, the occurrence of the invalid conflict transaction on the blockchain can be avoided. In addition, a method for simply accessing data on a blockchain as needed is provided according to the present disclosure, with which data analysis efficiency of blockchain developers, maintainers, and data analysts is effectively improved.

Further application fields will become apparent from the descriptions herein. The description and specific examples in the summary are only illustrative and are not intended to limit the scope of the present disclosure.

### BRIEF DESCRIPTION OF THE DRAWINGS

The drawings described herein are used for illustrating the selected embodiments, rather than all of the possible embodiments, and are not intended to limit the scope of the present disclosure. In the drawings:
Figure 1 is a block diagram of a device 100 for managing ledger data on a blockchain according to an embodiment of the present disclosure;
Figure 2 is a schematic diagram showing a process in which an invalid conflict transaction on a blockchain occurs according to an embodiment of the present disclosure;
Figure 3A shows a function that is prone to cause an invalid conflict according to an embodiment of the present disclosure;
Figure 3B shows a suggestion for improving the function that is prone to cause an invalid conflict shown in Figure 3A according to an embodiment of the present disclosure;
Figure 4 is a block diagram of a device 200 for managing ledger data on a blockchain according to another embodiment of the present disclosure;
Figure 5 shows ledger data stored on a blockchain which is in a form of a JSON document according to an embodiment of the present disclosure, where an exemplary structure A and an exemplary structure B are obtained after performing structure analysis on the ledger data;
Figure 6 is a block diagram of a device 300 for managing ledger data on a blockchain according to another embodiment of the present disclosure;
Figure 7 shows re-organized ledger data providing a historical track according to an embodiment of the present disclosure, where the ledger data is re-organized by a key 1, a key 2 and a key 3 of the ledger data, thereby providing a capability of accessing a complete history of data changes;
Figure 8 is a flowchart of a method for managing ledger data on a blockchain according to an embodiment of the present disclosure;
Figure 9 is a flowchart of a method for managing ledger data on a blockchain according to another embodiment of the present disclosure;
Figure 10 is a flowchart of a method for managing ledger data on a blockchain according to still another embodiment of the present disclosure; and
Figure 11 is a block diagram showing an exemplary structure of a general personal computer in which a device and a method for managing ledger data on a blockchain according to an embodiment of the present disclosure can be implemented.

Although the present disclosure is susceptible to various modifications and substitutions, specific embodiments thereof are shown in the drawings as an example and are described in detail herein. However, it should be understood that the description for specific embodiments herein is not intended to limit the present disclosure into a disclosed particular form, but rather, the present disclosure aims to cover all modifications, equivalents and substitutions within the spirit and scope of the present disclosure. It should be noted that, throughout the drawings, a numeral indicates a component corresponding to the numeral.

### DETAILED DESCRIPTION OF EMBODIMENTS

Examples of the present disclosure are described now more fully with reference to the drawings. The following description is merely exemplary substantively and is not intended to limit the present disclosure and an application or use thereof.

Exemplary embodiments are provided below to make the present disclosure thorough and convey a scope of the present disclosure to those skilled in the art. Examples of various specific details, such as specific elements, devices, and methods, are set forth to provide thorough understanding for the embodiments of the present disclosure. It is apparent to those skilled in the art that the exemplary embodiments may be embodied in multiple different forms without using specific details, and should not be construed as limiting the scope of the present disclosure. In some exemplary embodiments, well-known processes, well-known structures, and well-known technology are not described in detail.

At present, for a super ledger Fabric, in a case that a previous transaction and a subsequent transaction are simultaneously submitted while a value of a key is modified in the previous transaction, an invalid subsequent transaction may be caused due to a conflict in edition of the key when reading the value of the key in the subsequent transaction. Because the edition of the key is modified in the previous transaction, the key has a different edition in the subsequent transaction from that in the previous transaction. In the conventional technology, a user does not know how many invalid conflict transactions exist on the blockchain and why these invalid conflict transactions occur. Therefore, a technology is required to analyze all the invalid conflict transactions and provide an optimization suggestion to improve a chaincode of the users, to avoid occurrence of the invalid conflict transactions.

A technical solution for analyzing the reason why an invalid conflict transaction occurs is provided according to the present disclosure, and a corresponding optimization suggestion is also provided to avoid occurrence of the invalid conflict transaction.

### <Embodiment 1>

According to an embodiment of the present disclosure, a device for managing ledger data on a blockchain is provided, which includes a traversing unit, a classifying unit, and a suggesting unit. The traversing unit is configured to traverse a block where each invalid conflict transaction on the blockchain occurs and one or more previous transactions in a neighboring block of the block, until a previous transaction which causes the invalid conflict transaction is determined. The classifying unit is configured to classify a conflict pair composed of the invalid conflict transaction and the previous transaction which causes the invalid conflict transaction into a different conflict pattern. The suggesting unit is configured to provide, for the conflict pattern, a corresponding suggestion of improving a chaincode, to avoid occurrence of the invalid conflict transaction.

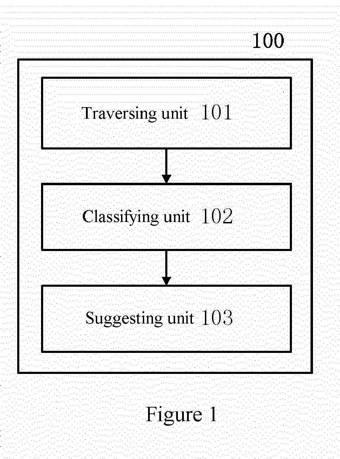

As shown in Figure 1, a device 100 for managing ledger data on a blockchain according to an embodiment of the present disclosure may include a traversing unit 101, a classifying unit 102 and a suggesting unit 103.

According to an embodiment of the present disclosure, the traversing unit 101 may be configured to traverse a block where each invalid conflict transaction on the blockchain occurs and one or more previous transactions in a neighboring block of the block, until a previous transaction which causes the invalid conflict transaction is determined. For example, for each invalid conflict transaction on the blockchain, a block where the invalid conflict transaction on the blockchain occurs and previous transactions on one or more previous blocks are traversed to query a previous transaction which causes the invalid conflict.

According to an embodiment of the present disclosure, for example, the traversing unit 101 may be configured to, for an identifier (a value of a key) of a read ledger operation of the invalid conflict transaction, look up a write ledger operation in a path of traversing in backtracking manner; and determine, as the previous transaction which causes the invalid conflict transaction, a previous transaction to which the write ledger operation belongs.

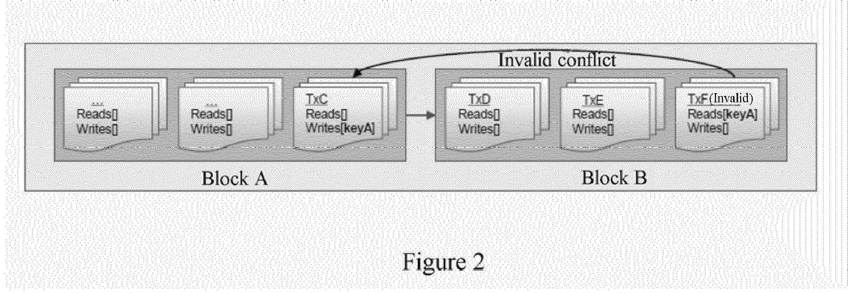

For example, as shown in Figure 2, for a key A in a read set Reads [ ] in an invalid conflict transaction TxF on a block B, by traversing a previous transaction TxE, a previous transaction TxD on the block B where the key A is located and a previous transaction TxC on a block A adjacent to the block B in a backtracking manner, it may be found that the key A is located in a write set Writes [ ] of the previous transaction TxC on the block A, that is, the key A is wrote into the previous transaction TxC on the block A. Therefore, it is determined that the previous transaction TxC updates an edition of the key A. The update of edition may cause subsequent invalid conflict transaction. It should be understood by those skilled in the art that the read set and the write set according to the present disclosure is only exemplary, and the present disclosure is not limited thereto.

According to an embodiment of the present disclosure, the invalid conflict transaction and the previous transaction may be simultaneously submitted. It should be understood by those skilled in the art that simultaneously submitting the transaction is also exemplary.

Next, after all invalid conflict transaction pairs (that is, conflict pairs each composed of the invalid conflict transaction and the previous transaction which causes the invalid conflict transaction) are recognized, according to an embodiment of the present disclosure, the classifying unit 102 may be configured to classify the conflict transaction pairs into different conflict patterns. According to an embodiment of the present disclosure, the conflict pattern includes, but is not limited to, concurrently invoking the same function and concurrently invoking different functions. It should be understood by those skilled in the art that the conflict pattern is only exemplary, and the present disclosure is not limited thereto.

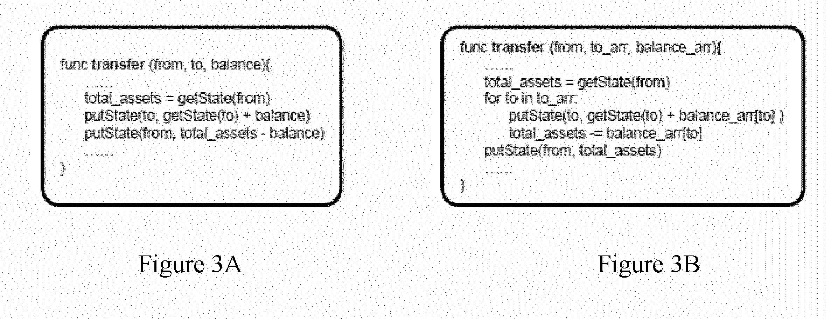

Next, according to an embodiment of the present disclosure, the suggesting unit 103 may be configured to provide, for the conflict pattern, a corresponding suggestion of improving a chaincode, to avoid occurrence of the invalid conflict transaction. For example, in a case of concurrently invoking the same function, the suggesting unit 103 according to the present embodiment may suggest the user not to invoke the function by adopting one time of batch invocation in an application program, and suggest the user to perform a service logic of the batch invocation in the intelligent contract (chaincode). For example, Figure 3A exemplarily shows a function that is prone to cause an invalid conflict, since there may be batch asset transfer of the same account, a high concurrently invoking conflict of the same function may occur. The suggesting unit 103 according to the present embodiment may suggest to improve the chaincode, that is, to perform the service logic of the batch invocation in the chaincode, as shown in Figure 3B, which shows an improvement suggestion for the function that is prone to cause an invalid conflict shown in Figure 3A. It should be understood by those skilled in the art that the function shown in Figure 3A and the suggestion shown in Figure 3B are only exemplary, and the present disclosure is not limited thereto.

According to the technical solution of the present disclosure for analyzing the reason why the invalid conflict transaction occurs, a corresponding chaincode optimization suggestion is provided to avoid occurrence of the invalid conflict transaction.

At present, for the super ledger Fabric, blockchain data may be accessed only by the chaincode, while the chaincode only provides some simple APIs rather than complex data query APIs to query data. However, the chaincode is designed for developing application programs rather than analyzing data off-line. Therefore, if the user wants to analyze data off-line, the conventional chaincode does not provide API for accessing ledger data on a blockchain. A solution for re-organizing ledger data on the blockchain is provided according to the present disclosure, to provide an advanced query for the ledger data.

### <Embodiment 2>

According to an embodiment of the present disclosure, a device for managing ledger data on a blockchain is provided, which includes a traversing unit and a recognizing unit. The traversing unit is configured to traverse all blocks on the blockchain, to extract document structures of each of the transactions. The recognizing unit is configured to re-organize the ledger data using the document structures, to provide a ledger data query.

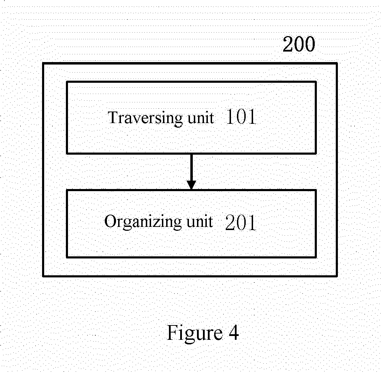

As shown in Figure 4, a device 200 for managing ledger data on a blockchain according to an embodiment of the present disclosure may include a traversing unit 101 and a recognizing unit 201.

Generally, data is stored on the blockchain in a form of the JSON document. At present, there is no method or tool for displaying how many kinds of documents are stored on the blockchain, and there lacks documents hierarchy structures for facilitating understanding of ledger data, resulting in that the user is difficult to operate the ledger data as needed, even a developer may also forget the format of the data stored over time.

Therefore, before the advanced data query is provided, various JSON document structures are extracted firstly to help the user understand the ledger data.

The traversing unit 101 according to an embodiment of the present disclosure may be configured to traverse all blocks on the blockchain, to extract document structures of each of the transactions. Then, the classifying unit 102 may be configured to classify the extracted document structures into different types. Next, the traversing unit 101 may be configured to re-traverse the ledger data on the blockchain based on the classified types, to collect all documents as the document structures.

Next, the recognizing unit 201 according to an embodiment of the present disclosure may be configured to re-organize the traversed ledger data based on the document structures, to provide a ledger data query.

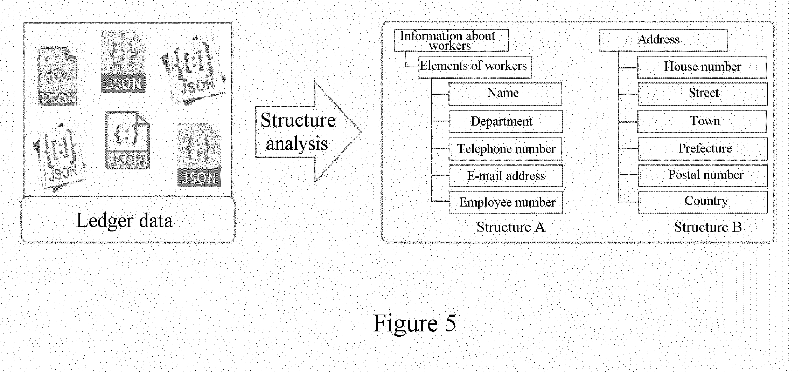

For example, Figure 5 shows ledger data stored on the blockchain in the form of the JSON document. An exemplary structure A and an exemplary structure B are obtained after performing structure analysis on the ledger data. For example, the exemplary structure A obtained by structure analysis relates to information about workers, where the information about workers may include elements of workers. The elements of workers may include names, departments, telephone numbers, e-mail addresses and employee numbers and the like. The exemplary structure B obtained by structure analysis relates to an address, where the address includes a house number, a street name, a town name, a prefecture name, a postal number, a country name and the like. It should be understood by those skilled in the art that the above document structures are only exemplary, and the present disclosure is not limited thereto.

According to an embodiment of the present disclosure, all the collected documents may be stored into a third-party database in a form of the document structures to provide an advanced data query such as a crosstab query and a field based query and the like.

The device for managing ledger data on a blockchain according to an embodiment of the present disclosure can provide an advanced data query based on the document structures.

A main feature of the blockchain is that data on the blockchain can not be manipulated. Therefore, history operation records for each document may be stored in a blockchain ledger based on a transaction. However, the blockchain does not provide any convenient way for accessing or tracking operation histories. Therefore, a method for re-organizing ledger data to provide history track is provided according to the present disclosure.

### <Embodiment 3>

According to an embodiment of the present disclosure, a device for managing ledger data on a blockchain is provided, which includes a traversing unit, an organizing unit and an indexing unit. The traversing unit is configured to traverse all transactions stored in the ledger data on the blockchain. The organizing unit is configured to re-organize the ledger data by identifiers of the ledger data. The indexing unit is configured to establish indices for the ledger data based on the identifiers.

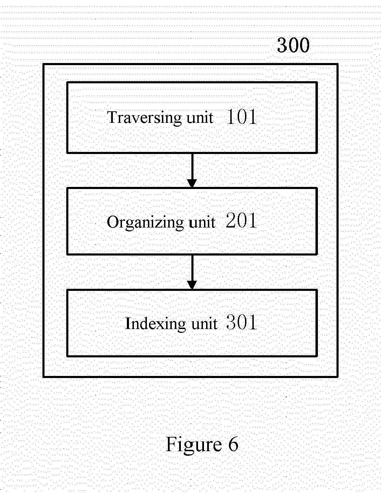

As shown in Figure 6, a device 300 for managing ledger data on a blockchain according to an embodiment of the present disclosure may include the traversing unit 101, the organizing unit 201 and an indexing unit 301.

The traversing unit 101 may be configured to traverse all transactions stored in the ledger data on the blockchain. The organizing unit 201 may be configured to re-organize the ledger data by keys (identifiers) of the ledger data. The indexing unit 301 may be configured to establish indices for the ledger data based on the keys.

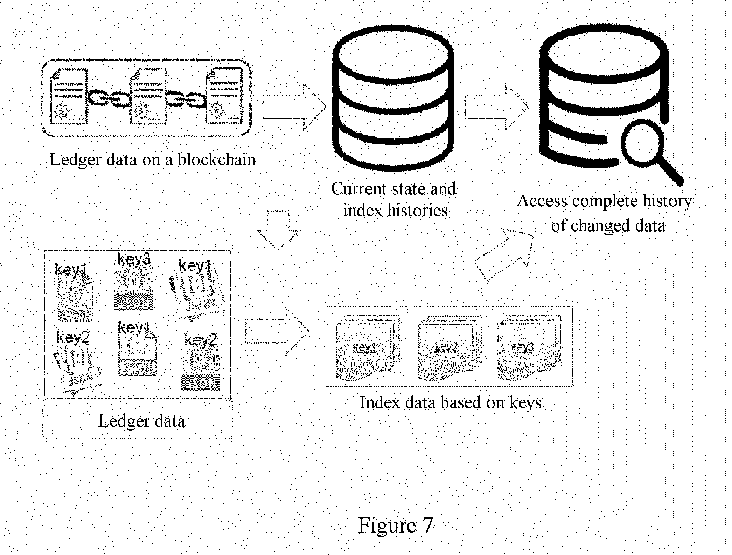

Figure 7 shows re-organized ledger data providing a history track, where the ledger data is re-organized based on a key 1, a key 2 and a key 3 of the ledger data, thereby providing a capability of accessing a complete history of data changes.

According to an embodiment of the present disclosure, the device 300 for managing ledger data on a blockchain may further include a storage unit (not shown), where the storage unit may store the ledger data with the indices into a third-party database, for tracking of history data.

With the device for managing ledger data on a blockchain according to the present disclosure, a user can track history record of the keys (identifiers) conveniently and access a complete history record of keys changes.

Three embodiments of the device for managing ledger data on a blockchain according to the present disclosure are described above. However, it should be understood by those skilled in the art that the device for managing ledger data on a blockchain according to the present disclosure is not limited to the above three embodiments. In other words, those skilled in the art may combine various units in the device for managing ledger data on a blockchain according to the present disclosure in any other manners as needed, which is not limited to the above three combinations.

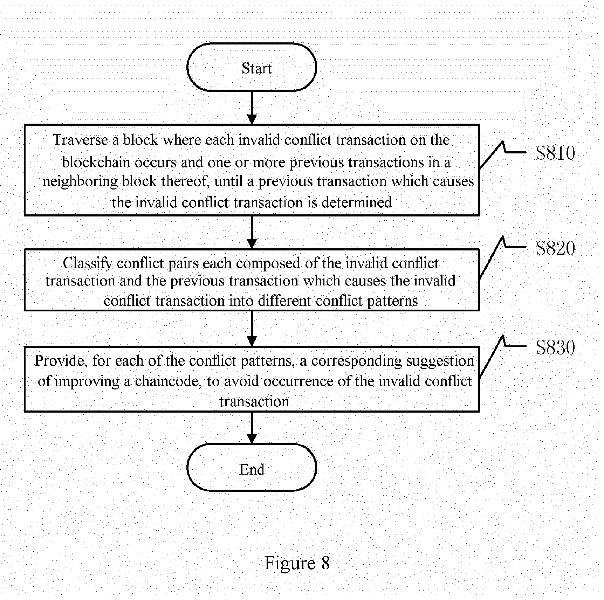

A method for managing ledger data on a blockchain according to an embodiment of the present disclosure is described blow with reference to Figure 8 to Figure 10. According to an embodiment of the present disclosure, as shown in Figure 8, the method for managing ledger data on a blockchain according to an embodiment of the present disclosure starts with step S810.

In step 810, a block where each invalid conflict transaction on the blockchain occurs and one or more previous transactions in a neighboring block of the block are traversed, until a previous transaction which causes the invalid conflict transaction is determined.

Next, in step S820, conflict pairs each composed of the invalid conflict transaction and the previous transaction which causes the invalid conflict transaction are classified into different conflict patterns.

Finally, in step S830, for each of the conflict patterns, a corresponding suggestion of improving a chaincode is provided, to avoid occurrence of the invalid conflict transaction.

The method for managing ledger data on a blockchain according to an embodiment of the present disclosure further includes: for an identifier of a read ledger operation of the invalid conflict transaction, looking up a write ledger operation in a path of traversing in backtracking manner; and determining, as the previous transaction which causes the invalid conflict transaction, a previous transaction to which the write ledger operation belongs.

In the method for managing ledger data on a blockchain according to an embodiment of the present disclosure, the invalid conflict transaction and the previous transaction are simultaneously submitted.

In the method for managing ledger data on a blockchain according to an embodiment of the present disclosure, the conflict pattern includes concurrently invoking the same function and concurrently invoking different functions.

In the method for managing ledger data on a blockchain according to an embodiment of the present disclosure, when the conflict pattern is concurrently invoking the same function, the method further includes: providing a suggestion of improving chaincode adopting one time of batch invocation.

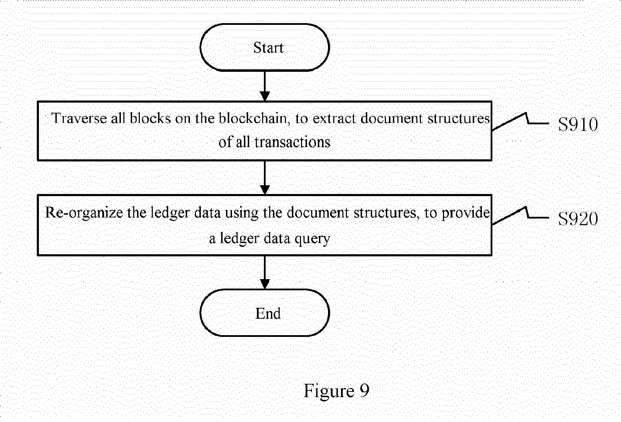

According to another embodiment of the present disclosure, as shown in Figure 9, the method for managing ledger data on a blockchain according to an embodiment of the present disclosure starts with step S910.

In step S910, all blocks on the blockchain are traversed to extract document structures of each of the transactions.

Next, in step S920, the ledger data is re-organized using the document structures to provide a ledger data query.

The method for managing ledger data on a blockchain according to an embodiment of the present disclosure further includes: classifying the extracted document structures into different types; and re-traversing the ledger data on the blockchain based on the classified types, to collect all documents as the document structures.

The method for managing ledger data on a blockchain according to an embodiment of the present disclosure further includes: storing all the collected documents in a form of the document structures into a third-party database.

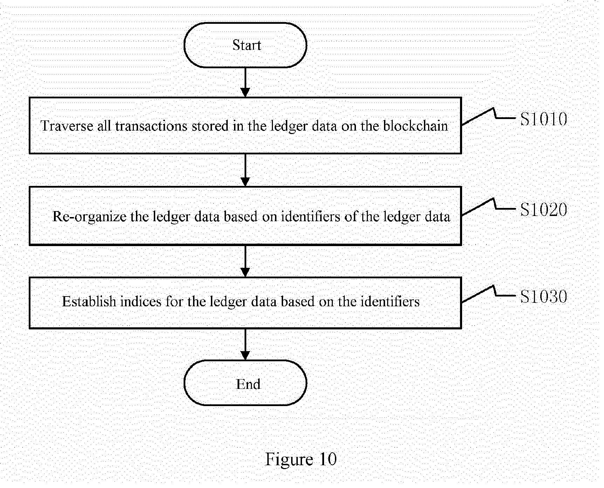

According to another embodiment of the present disclosure, as shown in Figure 10, the method for managing ledger data on a blockchain according to an embodiment of the present disclosure starts with step S1010.

In step S1010, all transactions stored in ledger data on the blockchain are traversed.

Next, in step S1020, the ledger data is re-organized based on identifiers of the ledger data.

Then, in step S1030, indices are established for the ledger data based on the identifiers.

The method for managing ledger data on a blockchain according to an embodiment of the present disclosure further includes: storing the ledger data with the indices into a third-party database, for tracking of history data.

Various embodiments of the above steps of the method for managing ledger data on a blockchain according to the embodiment of the present disclosure are described in detail above, which are not repeated herein.

It will be apparent that various operations of the method for managing ledger data on a blockchain according to an embodiment of the present disclosure may be implemented in a manner of computer-executable programs stored in various machine-readable storage mediums.

In addition, the object of the present disclosure can also be achieved by: directly or indirectly providing a storage medium including the executable program codes stored therein to a system or device; and reading and executing the above program codes by a computer, a central processing unit (CPU) in the system or the device. As long as the system or the device has a function of executing a program, the embodiment of the present disclosure is not limited to the program, and the program may be any form such as a target program, a program executed by an interpreter or a script program provided to the operating system.

The above machine-readable storage mediums include but are not limited to, various memory and storage units, semiconductor devices, disk units such as an optical disk, a magnetic disk and a magneto-optical disk, and other medium suitable for storing information.

In addition, the computer may also implement the technical solution of the present disclosure by connecting to a website on the Internet, downloading and installing the computer program codes according to the present disclosure to a computer and executing the program codes.

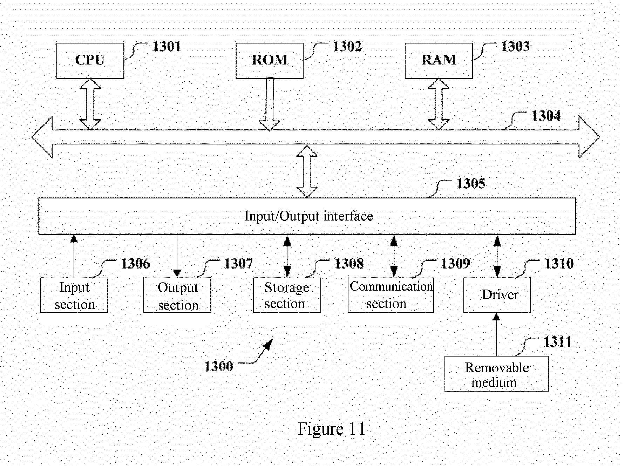

Figure 11 is a block diagram showing an exemplary structure of a general personal computer 1300 in which a method for managing ledger data on a blockchain according to an embodiment of the present disclosure may be implemented.

As shown in Figure 11, a CPU 1301 executes various processing according to a program stored in a read-only memory (ROM) 1302 or a program loaded to a random access memory (RAM) 1303 from a memory section 1308. Data required for various processing of the CPU 1301 may be stored in the RAM 1303 as needed. The CPU 1301, the ROM 1302 and the RAM 1303 are connected to each other via a bus 1304. An input/output interface 1305 is also connected to the bus 1304.

The following components are linked to the input/output interface 1305: an input section 1306 (including a keyboard, a mouse, and the like), an output section 1307 (including a display such as a cathode ray tube (CRT), a liquid crystal display (LCD), a loudspeaker and the like), a storage section 1308 (including a hard disk and the like), and a communication section 1309 (including a network interface card such as a LAN card, a modem and the like). The communication section 1309 performs communication processing via a network such as the Internet. A driver 1310 may also be connected to the input/output interface 1305 as needed. A removable medium 1311 such as a magnetic disk, an optical disk, a magnetic optical disk and a semiconductor memory may be installed in the driver 1310 as needed, so that a computer program read therefrom is installed in the storage section 1308 as needed.

In the case where the foregoing series of processing are implemented with software, programs forming the software are installed from a network such as the Internet or a storage medium such as the removable medium 1311.

It should be appreciated by those skilled in the art that the storage medium is not limited to the removable medium 1311 shown in Figure 11, which has a program stored therein and is distributed separately from the device to provide the program to the user. The removable medium 1311 may be, for example, a magnetic disk (including a floppy disk (registered trademark)), an optical disk (including a compact disk read-only memory (CD-ROM) and a digital versatile disk (DVD), a magneto-optical disk (including a mini disc (MD) (registered trademark)), and a semiconductor memory. Alternatively, the storage medium may be a ROM 1302, a hard disk included in the storage section 1308 in which programs are stored, and may be distributed to the user along with a device in which they are incorporated.

According to systems and methods described in the present disclosure, it is apparent that each component and each step can be decomposed and/or recombined. These decomposition and/or recombination shall be considered as equivalents of the present disclosure. Also, steps for executing the above-described series of processing can be naturally performed in chronological order in the order described, but are not necessarily performed in chronological order. Some steps may be performed in parallel or independently from each other.

Although the embodiments of the present disclosure have been described above in detail with reference to the drawings, it should be understood that the above-described embodiments are merely used for illustrating the present disclosure and are not intended to limit the present disclosure. Those skilled in the art can make various modifications and variations to the above-described embodiments without departing from the substance and scope of the present disclosure. Accordingly, the scope of the present disclosure is defined only by the appended claims and their equivalents.

With respect to embodiments including the above embodiments, the following notes are also disclosed.
(1). A device for managing ledger data on a blockchain, including:
   a traversing unit, configured to traverse a block where each invalid conflict transaction on the blockchain occurs and one or more previous transactions in a neighboring block of the block, until a previous transaction which causes the invalid conflict transaction is determined;
   a classifying unit, configured to classify conflict pairs each composed of the invalid conflict transaction and the previous transaction which causes the invalid conflict transaction into a different conflict patterns; and
   a suggesting unit configured to provide, for each of the conflict patterns, a corresponding suggestion of improving a chaincode, to avoid occurrence of the invalid conflict transaction.
(2). The device according to (1), where the traversing unit is further configured to:
   for an identifier of a read ledger operation of the invalid conflict transaction, look up a write ledger operation in a path of traversing in backtracking manner; and
   determine, as the previous transaction which causes the invalid conflict transaction, a previous transaction to which the write ledger operation belongs.
(3). The device according to (2), where the invalid conflict transaction and the previous transaction are simultaneously submitted.
(4). The device according to (1), where the conflict pattern includes concurrently invoking the same function and concurrently invoking different functions.
(5). The device according to (4), where when the conflict pattern is concurrently invoking the same function, the suggesting unit is further configured to provide a suggestion of improving the chaincode by adopting one time of batch invocation.
(6). The device according to (1), where the traversing unit is further configured to traverse all blocks on the blockchain, to extract document structures of all transactions, and the device further includes an organizing unit configured to re-organize the ledger data using the document structures, to provide a ledger data query.
(7). The device according to (6), where the classifying unit is further configured to classify the extracted document structures into different types, and the traversing unit is further configured to re-traverse the ledger data on the blockchain based on the classified types, to collect all documents as the document structures.
(8). The device according to (7), further includes a storage unit configured to store all the collected documents in a form of the document structures into a third-party database.
(9). The device according to (1), where the traversing unit is further configured to traverse all transactions stored in the ledger data on the blockchain, and
   the device further includes an organizing unit and an indexing unit, where the organizing unit is configured to re-organize the ledger data based on identifiers of the ledger data, and the indexing unit is configured to establish indices for the ledger data based on the identifiers.
(10). The device according to (9), further includes a storage unit configured to store the ledger data with the indices into a third-party database, for tracking of history data.
(11). A method for managing ledger data on a blockchain, including:
   traversing a block where each invalid conflict transaction on the blockchain occurs and one or more previous transactions in a neighboring block of the block, until a previous transaction which causes the invalid conflict transaction is determined;
   classifying conflict pairs each composed of the invalid conflict transaction and the previous transaction which causes the invalid conflict transaction into different conflict patterns; and
   providing, for each of the conflict patterns, a corresponding suggestion of improving a chaincode, to avoid occurrence of the invalid conflict transaction.
(12). The method according to (11), including:
   for an identifier of a read ledger operation of the invalid conflict transaction, looking up a write ledger operation in a path of traversing in backtracking manner; and
   determining, as the previous transaction which causes the invalid conflict transaction, a previous transaction to which the write ledger operation belongs.
(13). The method according to (12), where the invalid conflict transaction and the previous transaction are simultaneously submitted.
(14). The method according to (11), where the conflict pattern includes concurrently invoking the same function and concurrently invoking different functions.
(15). The method according to (14), where when the conflict pattern is concurrently invoking the same function, providing a suggestion of improving the chaincode by adopting one time of batch invocation.
(16). The method according to (11), further includes:
   traversing all blocks on the blockchain, to extract document structures of all transactions; and
   re-organizing the ledger data using the document structures, to provide a ledger data query.
(17). The method according to (16) further includes:
   classifying the extracted document structures into different types; and
   re-traversing the ledger data on the blockchain based on the classified types, to collect all documents as the document structures.
(18). The method according to (17) further includes:
   storing all the collected documents in a form of the document structures into a third-party database.
(19). The method according to (11) further includes:
   traversing all transactions stored in the ledger data on the blockchain;
   re-organizing the ledger data based on identifiers of the ledger data; and
   establishing indices for the ledger data based on the identifiers.
(20). A program product, including machine readable instruction codes stored therein, where the machine readable instruction codes, when being read and executed by a computer, cause the computer to implement the method according to any one of (11) to (19).

## Claims

1. A device for managing ledger data on a blockchain, comprising:
a traversing unit, configured to traverse a block where each invalid conflict transaction on the blockchain occurs and one or more previous transactions in a neighboring block of the block, until a previous transaction which causes the invalid conflict transaction is determined;
a classifying unit, configured to classify conflict pairs each composed of the invalid conflict transaction and the previous transaction which causes the invalid conflict transaction into a different conflict patterns; and
a suggesting unit configured to provide, for each of the conflict patterns, a corresponding suggestion of improving a chaincode, to avoid occurrence of the invalid conflict transaction.

2. The device according to claim 1, wherein the traversing unit is further configured to:
for an identifier of a read ledger operation of the invalid conflict transaction, look up a write ledger operation in a path of traversing in backtracking manner; and
determine, as the previous transaction which causes the invalid conflict transaction, a previous transaction to which the write ledger operation belongs.

3. The device according to claim 2, wherein the invalid conflict transaction and the previous transaction are simultaneously submitted.

4. The device according to claim 1, wherein the conflict pattern includes concurrently invoking the same function and concurrently invoking different functions.

5. The device according to claim 4, wherein when the conflict pattern is concurrently invoking the same function, the suggesting unit is further configured to provide a suggestion of improving the chaincode by adopting one time of batch invocation.

6. The device according to claim 1, wherein the traversing unit is further configured to traverse all blocks on the blockchain, to extract document structures of all transactions, and the device further includes an organizing unit configured to re-organize the ledger data using the document structures, to provide a ledger data query.

7. The device according to claim 6, wherein the classifying unit is further configured to classify the extracted document structures into different types, and the traversing unit is further configured to re-traverse the ledger data on the blockchain based on the classified types, to collect all documents as the document structures.

8. The device according to claim 7, further comprising a storage unit configured to store all the collected documents in a form of the document structures into a third-party database.

9. The device according to claim 1, wherein the traversing unit is further configured to traverse all transactions stored in the ledger data on the blockchain, and
the device further comprises an organizing unit and an indexing unit, where the organizing unit is configured to re-organize the ledger data based on identifiers of the ledger data, and the indexing unit is configured to establish indices for the ledger data based on the identifiers.

10. The device according to claim 9, further comprising a storage unit configured to store the ledger data with the indices into a third-party database, for tracking of history data.

11. A method for managing ledger data on a blockchain, comprising:
traversing a block where each invalid conflict transaction on the blockchain occurs and one or more previous transactions in a neighboring block of the block, until a previous transaction which causes the invalid conflict transaction is determined;
classifying conflict pairs each composed of the invalid conflict transaction and the previous transaction which causes the invalid conflict transaction into different conflict patterns; and
providing, for each of the conflict patterns, a corresponding suggestion of improving a chaincode, to avoid occurrence of the invalid conflict transaction.

12. The method according to claim 11, comprising:
for an identifier of a read ledger operation of the invalid conflict transaction, looking up a write ledger operation in a path of traversing in backtracking manner; and
determining, as the previous transaction which causes the invalid conflict transaction, a previous transaction to which the write ledger operation belongs.

13. The method according to claim 12, wherein the invalid conflict transaction and the previous transaction are simultaneously submitted.

14. The method according to claim 11, wherein the conflict pattern includes concurrently invoking the same function and concurrently invoking different functions.

15. A program product, including machine readable instruction codes stored therein, wherein the machine readable instruction codes, when being read and executed by a computer, cause the computer to implement the method according to any one of claims 11 to 14.
